(19) Europäisches Patentamt
European Patent Office
Office européen des brevets

(11) EP 3 839 680 B1

(12) **EUROPEAN PATENT SPECIFICATION**

(45) Date of publication and mention of the grant of the patent:
**23.08.2023 Bulletin 2023/34**

(21) Application number: **19218590.8**

(22) Date of filing: **20.12.2019**

(51) International Patent Classification (IPC):
**G05B 23/02** (2006.01)

(52) Cooperative Patent Classification (CPC):
**G06N 20/10; G05B 23/0221; G05B 23/0281; G06F 18/2135;** G06F 2218/20

(54) **METHOD AND DEVICE FOR CONTROLLING A MACHINE USING PRINCIPAL COMPONENT ANALYSIS**

VERFAHREN UND VORRICHTUNG ZUR STEUERUNG EINER MASCHINE MIT HAUPTKOMPONENTENANALYSE

PROCÉDÉ ET DISPOSITIF DE COMMANDE D'UNE MACHINE UTILISANT L'ANALYSE EN COMPOSANTS PRINCIPAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.06.2021 Bulletin 2021/25**

(73) Proprietor: **Robert Bosch GmbH**
**70442 Stuttgart (DE)**

(72) Inventor: **Munoz Delgado, Andres Mauricio**
**71263 Weil Der Stadt (DE)**

(56) References cited:
• BEI WANG ET AL: "Loading-Based Principal Component Selection for PCA Integrated with Support Vector Data Description", INDUSTRIAL & ENGINEERING CHEMISTRY RESEARCH, vol. 54, no. 5, 2 February 2015 (2015-02-02), pages 1615-1627, XP055701730, ISSN: 0888-5885, DOI: 10.1021/ie503618r
• CHEEMA S ET AL: "Applicability of feature selection on multivariate time series data for robotic discovery", ADVANCED COMPUTER THEORY AND ENGINEERING (ICACTE), 2010 3RD INTERNATIONAL CONFERENCE ON, IEEE, PISCATAWAY, NJ, USA, 20 August 2010 (2010-08-20), pages 592-597, XP031758971, ISBN: 978-1-4244-6539-2
• GAJJAR SHRIRAM ET AL: "Real-time fault detection and diagnosis using sparse principal component analysis", JOURNAL OF PROCESS CONTROL, vol. 67, 29 April 2017 (2017-04-29), pages 112-128, XP085403112, ISSN: 0959-1524, DOI: 10.1016/J.JPROCONT.2017.03.005

**Description**

Prior Art

Bei Wang et al.: "Loading-Based Principal Component Selection for PCA Integrated with Support Vector Data Description", INDUSTRIAL & ENGINEERING CHEMISTRY RESEARCH, vol. 54, no. 5, 2 February 2015, pages 1615-1627 discloses a method that respectively selects principal components for each variable according to the loadings.

Description

The present disclosure relates to a computer-implemented method for controlling a production line by controlling operation parameters of the production line as well as the corresponding machine controller, computer program and computer-readable medium adapted to perform the method.

Finding the root causes for errors, anomalies, malfunctions and/or failures of computer-controlled systems such as a production/manufacturing line, a robot, a surveillance system or a medical imaging system, enables providing the necessary information in order to be able to correct and improve these systems. The search and measurement of root causes is however not a simple task and is often prone to different potential interpretations.

Given an input dataset D and a causally dependent target variable V, the main goal of root cause analysis is to find the "best" and "simplest" explanations for the behavior of V given observations of D.

For example, in the case of a production line, the target variable V may be a probability of failure or escape, e.g. as predicted by a deployed machine learning model. Understanding the reasons behind the failures is crucial to increase the efficiency of the production line, for example, by learning and understanding which operational parameters of the production line affect the target variable V and modifying them accordingly to reduce the failure/escape rate of the production line.

In case the target variable V or a variable in D is the output of some prediction model such as a machine learning model, root cause analysis may also help to elucidate some of its biases, thus allowing a better understanding for the model development cycle, and to make sure that the model is properly validated and verified prior to being deployed in the field.

Finding causality in datasets can be impossible due to limitations of the dataset. Therefore, in practice, finding causality is often replaced by finding correlations in the dataset. However, quantifying and representing correlations in the dataset is no problem with a clear-cut solution. Common approaches such as univariate and multivariate correlation methods traditionally attempt to explain the variable V from a set of variables D from a linear approximation perspective. The result is often summarized by a single metric/number which can often be misleading or an insufficient source of information in order to be able to identify the underlying dynamics in the dataset D. The same is true for other common correlation statistics such as the Pearson correlation coefficient, Mutual Information, etc.

Another method to discover correlation in a dataset (also often used for dimensionality reduction) is Principle Component Analysis, PCA, which attempts to systematically decompose the variance in a given dataset by mapping the original data points onto so-called "principal component axes". The PCA decomposition finds how the variance of the dataset is structured (in decreasing order) from linear combinations of these axes.

Non-linear extensions of the PCA method exist, for example kernel PCA methods, to find non-linear relationships in the dataset. A kernel PCA is for example described in the paper "Nonlinear component analysis as a kernel eigenvalue problem" by Schölkopf et al. (Arbeitsgruppe Bülthoff), published in Neural Computation, 1996.

In reality, the dataset D often captures different groups of variables that describe separate, but related dynamic processes. For many applications it is therefore not sufficient to rely on simple correlation measures or on PCA to determine how the target variable V depends on groups (subsets) of variables of the dataset D.

For example, in the case of a production line (arrangement), data from multiple sensors may be sampled continuously along the production line. At the end some decision must be made on whether the produced part is good, e.g. for quality control purposes. Without an explainable way of assessing how the target variable V depends on variable subsets of the array of measurements taken throughout the production process, error debugging is hard and expensive. Simple correlation statistics do not reveal the true underlying dynamics of such complex systems because the dependencies between the individual variables are left out.

The computer-implemented method and machine controller of the independent claims allow addressing the case of finding, for a target variable V, groups (subsets) of measurements variables of a dataset D that are most strongly correlated with the target variable V, i.e. allows finding explanations on how the target variable depends on groups of variables. In case the control variable is indicative of an anomaly, the groups may help explain the root cause for the anomaly.

In particular, in the case of a production line (arrangement), the groups of measurement variables returned by the method may be used to e.g. determine the reasons for a part having a defect or an anomaly, or to explain system malfunctions, thus reducing the cost and increasing the efficiency of error debugging, and helping in verifying and validating production processes.

As a result, this may for example address some of the shortcomings of simple correlation statistics. The groups determined by the method describe dynamic processes in the dataset D and are more descriptive than pairwise variable statistics.

In particular, the entire variance contained in the dataset D is decomposed, i.e. the solution space is covered much more broadly, and allows to capture all of the effects that may affect the target variable V.

The present invention is set forth and characterized in the independent claims 1, 3, 4 and 5, while dependent claim 2 describe other characteristics of the invention.

A computer-implemented method for controlling a production line includes sensing values of measurement variables for a plurality of measurement events during an operation of the production line, wherein a value is sensed for each measurement variable at each measurement event of the plurality of measurement events, each measurement variable representing an operation parameter of the production line; determining a value of a target variable for each measurement event of the plurality of measurement events, wherein the target variable is a continuous variable representing a probability of a part produced in the production line being defective and/or having an anomaly; determining, for each measurement event, a data point including the sensed values of the measurement variables and the determined value of the target variable by joining the sensed values of the measurement variables and the determined value of the target variable; performing a principal component analysis or a kernel principal component analysis for the plurality of data points resulting in loading values and principal components of the data points; determining, for the target variable, one or more principal components for which the absolute value of the loading value is greater than a first predetermined threshold, wherein the first predetermined threshold is set such that the totality of groups for the principal components includes at most a predetermined percentage of the measurement variables; identifying, for each determined principal component, one or more measurement variables for which the absolute value of the loading value is higher than a second predetermined threshold, wherein the second predetermined threshold is set such that the totality of groups for the principal components includes at most a predetermined percentage of the measurement variables; grouping the identified measurement variables for each determined principal component into a respective group; and performing joint control of operation parameters represented by measurement variables grouped into the same group to modify the target variable.

Determining groups of measurement variables that have an impact on the target variable has the effect of capturing dependencies between the individual measurement variables, thus enabling to capture more complex underlying clusters of dynamic behaviors for the entirety of the measurement variables that have a potentially non-linear impact on the target variable.

The determined groups of measurement variables are likely to indicate explanations for (root causes behind) the behavior of the target variable, and can thus be used jointly to perform control of operation parameters represented by measurement variables grouped into the same group to modify the target variable accordingly.

The method may further include filtering out each group comprising the same measurement variables as another group if the eigenvalue of the principal component associated to the group is smaller than the eigenvalue of the principal component of the other group and the group and the other group indicate opposite correlations between the target variable and the measurement variables.

Filtering out the groups comprising the exact same measurement variables as a "larger" group, i.e. a group where the eigenvalue of the principal component associated to the group is larger, but with the opposite correlation to the target variable enables to filter out contradictions between the groups/findings.

Due to the nature of principal component analysis, or kernel principal analysis, it is expected to find some contradictions in the groups, since the variance of the dataset comprising the entirety of the measurement variables is completely decomposed, i.e. "smaller" groups may explain variance after discounting all previously observed effects/variance, and may therefore capture the effect that there is some variance in the dataset in the opposing direction of a "larger" group.

Setting the first threshold and/or the second threshold such that the totality of groups for the principal components includes at most a predetermined percentage of the measurement variables enables to set a maximum number of measurements variables which are considered to have a large enough impact on the target variable. This enables to reduce the search for root causes of the behavior of the target variable to the measurement variables (comprised in the groups) having the greatest effect on the target variable.

A machine controller is configured to perform the above defined computer-implemented methods.

The machine controller provides the advantages identified above by use of the above defined computer-implemented methods. Such controller is applied in the context of a production line arrangement.

A computer program includes instructions arranged to cause a computer system to perform the above defined computer-implemented methods.

A computer-readable medium includes transitory or non-transitory data representing instructions arranged to cause a computer system to perform a computer-implemented method as defined above.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows an exemplary production line arrangement.

Figure 2 shows Anscombe's quartet.

Figure 3 shows an exemplary principal component analysis.

Figure 4 shows an exemplary method to determine groups of variables having a potential causal impact on a target variable.

Figure 5 shows a flow diagram illustrating an exemplary method for controlling a machine.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

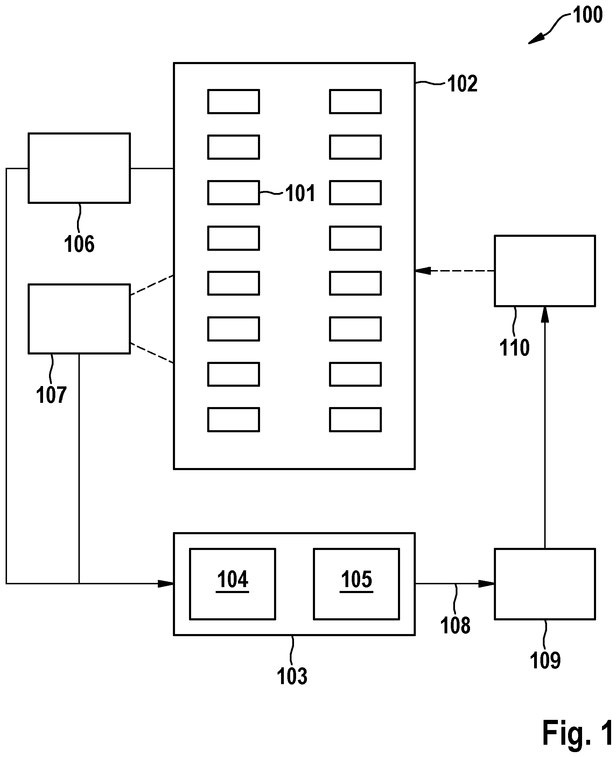

Figure 1 shows an exemplary production line arrangement 100.

In the example of figure 1, the parts 101 are positioned on a production line 102.

A controller 103 includes data processing components, e.g. a processor (e.g. a CPU (central processing unit)) 104 and a memory 105 for storing control software according to which the controller 103 operates, and data on which the processor 104 operates.

The data stored in memory 105 may for example include sensor signals/data received from one more sensors 106. The one or more sensors 106 may be any type of sensors that output continuous data. The one or more sensors may also be used jointly. For example the one or more sensors 106 may sense the temperature, pressure, concentration, torque, humidity, etc.

Optionally, the memory 105 also receives image data from one or more image sensors 107, e.g. cameras. In this case, the controller 103 may determine that a part 101 is defective (and/or has an anomaly) based on the image data received from the one or more image sensors 107. This determination may for example be achieved by using a machine learning model which classifies the received image data into "OK" and "Not OK" images.

For a part 101 considered to be defective, controller 103 may determine, based on the received input sensor data from the one or more sensors 106, the (potential) root causes of the defect. In particular, controller 103 may determine one or more groups (subsets) of variables most likely responsible for the defect.

For example, controller 103 may determine that the group of variables (heat, pressure, welding time) is the group most likely responsible for the defect of the part. This particular group of variables may be associated with a specific point in the production process, i.e. it may be possible to trace back at which step/level of the production process the problem is most likely occurring.

It should be noted that the values of the variables may be measured with sensors and/or via controlled operational parameters, e.g. a set welding time, set temperature, etc.

Controller 103 may then send a feedback signal 108 to an error-handling module 109. The feedback signal 108 contains an explanation for the defect, i.e. information representative of the causes for the defect. For example, the feedback signal 108 may contain one or more (sub)groups of variables most likely responsible for the defect and, if it could be determined, the corresponding step/level of the production line where the problem is most likely occurring.

Error-handling module 109 may then for example use the feedback signal 108 to adapt the production process accordingly. For example, error-handling module 109 may modify the operating parameters of the production process, such as applied pressure, heat, weld time, etc. to reduce the risk of defects/failures. The error-handling module 109 may further command an actuator 110 to adapt the production process and/or to remove defective parts from the production line.

The error-handling module 109 may, after receiving the feedback signal 108 and depending on the level of correlation between the identified one or more groups of variables responsible for the defect and a target (control) variable, control the production process to operate in a safe mode or may shut it down. According to the invention, the target variable is a continuous variable representing the probability of a part being defective and/or having an anomaly.

The error-handling module 109 may implement other user-specified rules and/or countermeasures in reaction to receiving a feedback signal 108.

Optionally, the error-handling module 109 is part of controller 103.

A similar system as the one illustrated in figure 1 could be used in other technical fields, e.g. a system for conveying information such as a surveillance system or a medical (imaging) system, or a computer-controlled machine such as a robot, a domestic appliance, a power tool, a personal assistant or an access control system.

In the following, the determination of the groups of variables most likely responsible for the defect of a part will be explained in more details.

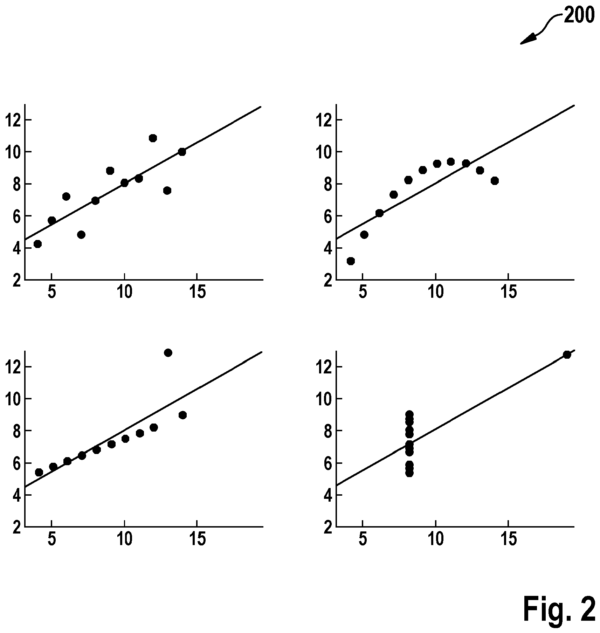

Figure 2 shows Anscombe's quartet.

In figure 2, Anscombe's quartet 200 is illustrated, which is a sample dataset of four sample distributions that all have the same descriptive statistics, i.e. which all have the same mean, variance, correlation, etc.

However, as is clearly shown in figure 2, each of the four sets has unique properties, i.e. the descriptive statistics are not enough to describe them. Commonly used correlation statistics such as the Pearson correlation coefficient, odds ratio, mutual information, etc. are often not enough to capture the underlying dynamics of complex datasets/systems.

Therefore, for many applications, in particular for root cause analysis, it is not sufficient to rely on traditional correlation methods and measures.

Another method to find correlations in a dataset is principal component analysis, PCA, which attempts to systematically decompose the variance of a given dataset by mapping the original values of the variables (data points) onto so-called principal components or "principal components axes".

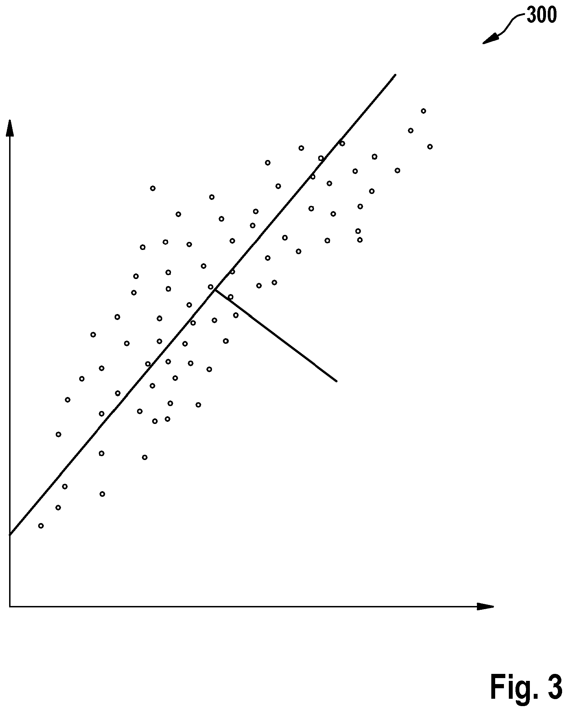

Figure 3 shows an exemplary principal component analysis with two principal components (axes), wherein the first principal component (axis) starts from the y-axis with a positive slope, and the second principal component (axis) is orthogonal to the first one.

In figure 3, a (linear) PCA for a simple two-dimensional dataset with two axes is illustrated.

The PCA decomposition finds how the variance of the dataset is structured (in decreasing order) from linear combinations of the two axes. In this example, two new principal components are found.

In more details, the PCA method finds most (largest amount possible) of the variance contained in the dataset spread along the first principal component, then among all other directions orthogonal to the axis of the first principal component, the PCA method finds the second principal component, which explains most (largest amount possible) of the remaining variance contained in the dataset.

In other words, the PCA method is an orthogonal transformation which determines for a sample set containing values of correlated variables a set of linearly uncorrelated principal components.

It should be noted that the PCA method is also often used for dimensionality reduction of datasets.

Extensions of the PCA method usually use kernels/kernel methods and are called kernel principal component analysis, kernel PCA or KPCA.

Performing such a kernel PCA decomposition usually comprises at least the following steps:

Firstly, the input dataset D is normalized, wherein each variable is normalized by removing its mean and dividing by the variance, i.e. the normalized variables have a mean equal to zero and a variance equal to one.

Secondly, a so-called similarity kernel for the dataset D is computed. In linear PCA the similarity kernel is usually the covariance of D.

Thirdly, the eigenvalues and eigenvectors of the previous output, e.g. in linear PCA the eigenvalues and eigenvectors of the covariance matrix, are computed. The eigenvectors are usually sorted by decreasing eigenvalues and arranged in a matrix. The resulting matrix is typically referred to as the loadings matrix (or "coefficients matrix"), wherein columns correspond to the principal components and the rows correspond to the variables of dataset D.

The values of the loadings matrix are called loadings (or loading values) and can be positive or negative. However, no specific meaning can be assigned to the sign of the loadings, only the relative sign within each column/principal component matters to determine correlation or anticorrelation between the variables.

Optionally, the output of the first step is multiplied with the output of the third step to retrieve the mapping of the original data in PCA space.

For more details on kernel PCA, see for example the above mentioned paper "Nonlinear component analysis as a kernel eigenvalue problem" by Schölkopf et al. (Arbeitsgruppe Bülthoff), published in Neural Computation, 1996.

However, PCA, kernel PCA, and other multivariate correlation analysis methods fail to capture how groups of variables contained in the dataset D are correlated to a target variable.

For example, in the case of a production line as illustrated by figure 1, it is not possible to determine how the target variable V (representing the probability of a part being defective) depends on different groups of variables/measurements taken throughout the production process, making error debugging hard and expensive.

This is because the dependencies between the individual variables are explicitly left out in correlation analysis methods such as PCA.

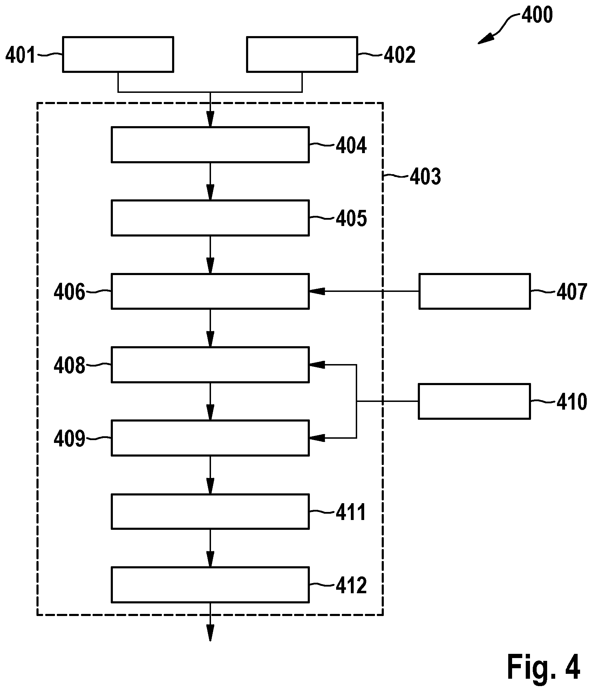

Figure 4 shows an exemplary method 400 to determine groups of variables having a potential causal impact on a target variable, for example carried out by the controller of a machine such as e.g. controller 103 of the production line arrangement 100 illustrated in figure 1.

In the example of figure 4, the dependencies between the individual variables of a dataset 401, labelled D in the following, are explicitly taken into account.

This may provide a way to find groups of measurement variables of D which are likely to be root causes behind the behavior of a target (control) variable 402, labelled V in the following.

The broken line 403 represents the boundary between the processing to determine the groups of measurement variables of the dataset D having a potential causal impact on the target variable V and outside inputs/parameters.

In step 404, if not already the case, all of the variables of dataset D and the target variable V are resampled using signal processing resampling techniques so that they share the same sampling rate, i.e. all of the variables (including the target variable V) have the same number of samples.

In step 405, a new dataset D' is constructed, wherein

$$D' = D \cup V$$

The target variable V is thus added to the dataset D. The dataset D' may be structured in such a way that the variables are given in the columns (of a matrix) and the corresponding samples are given in the rows (of a matrix).

In step 406, a kernel PCA is applied to the dataset D' using a kernel 407. This results in loadings (coefficients) values and principal components for the dataset D'.

The kernel 407 may be received from an outside source, it may for example be input by a user.

In case the dataset D' is to be analyzed to find linear relationships, a linear kernel such as e.g. a linear covariance kernel may be used. To find non-linear relationships a non-linear kernel such as e.g. Mutual Information kernel may be used.

In step 408, the resulting loadings matrix/plot output is examined to find (potentially) causal sub(groups) of the dataset D which explain the behavior of target variable V.

Without loss of generality, the principal components may for example be given as columns of the loadings matrix and the original variables of dataset D' as rows of the loadings matrix.

The columns of the resulting loadings matrix are searched to find columns where the absolute value of the loading of the target variable V (given by one of the rows) is higher than a predetermined threshold 410. This results in a set of columns S, which is the set of columns where the target variable V is active.

The predetermined threshold 410 may be a user-specified threshold and typically will be a value between 0 and 1. For example the predetermined threshold 410 may have the value 0.01, 0.05, 0.1, 0.15 or 0.2. The predetermined threshold 410 may be chosen to be sufficiently discriminative, i.e. only a small percentage of the total number of variables should be in each of the later determined groups of measurement variables, e.g. 1%, 5%, 10%. The right value of the predetermined threshold 410 to achieve this typically depends on the dataset/distribution and on the specific problem.

In step 409, for the determined set of columns S, all the measurement variables, i.e. the variables of dataset D, for which the absolute value of the loading is higher than the predetermined threshold 410 are identified/determined.

It should be noted that the predetermined threshold 410 used in step 409 may be different than the one used in step 408. For example, the predetermined thresholds may be chosen in such a way that that the groups (formed in step 411) include at most a predetermined percentage of the measurement variables.

In step 411, for each column of the set S, if at least one measurement variable has been identified for the column in step 409, the identified one or more measurement variables are grouped together to form a group of variables.

These are the groups of measurement variables that are significantly correlated with the target variable V, in case the loading sign for the target variable V is the same as for the identified measurement variables (or anticorrelated with the target variable V, in case the loading sign for the target variable V is the opposite as for the identified measurement variables).

The groups may sometimes further be split up into groups having a positive correlation with the target variable V and groups having a negative correlation with the target variable V. However, splitting up the variables in such a way is not always possible and/or desirable since a single group may have both variables that are positively as well as negatively correlated to the target variable V.

In step 412, some of the groups provided by step 411 are filtered out. To this end the groups are first ordered in order of decreasing eigenvalue of the principal components (this is provided by the kernel PCA in step 406). It should be noted that this may be done as soon as the kernel PCA has been applied to the dataset D, in other words at any point after step 406.

Let $D'_1, D'_2, ..., D'_n$ denote the ordered groups. A group $D'_k$ is filtered out/removed if there is another group $D'_j, j < k$, such that $D'_j$ contradicts the findings from $D'_k$.

In other words, a group comprising the same measurements variables is filtered out if the eigenvalue of the principal component associated with the group is smaller than the eigenvalue of the principal component associated with another group and if the group and the other group indicate opposite correlations between the target variable and the measurement variables.

The need to filter out some of the groups is due to the nature of the PCA decomposition, which decomposes the variance comprised in a dataset completely. It is therefore often the case that some of the groups contradict each other. This effect is for example illustrated in figure 3, where it is apparent that the plotted data has a positive correlation. This information is captured by the first principal component, but is contradicted by the second principal component. This is because the second principal component only explains the remaining variance comprised in the dataset, i.e. explains the variance only after discounting all previously observed effects, and therefore trivially captures the effect that there is some variance in the data in the opposite direction.

The filtered groups may then be output for further processing, and are candidates for root causes, for example root causes in the case of a system malfunction/anomaly.

The groups returned by the method described by figure 4 correspond to clusters of dynamic behavior that describe latent processes in the dataset D which have a potentially non-linear impact on the behavior of the target variable V. The groups of measurement variables are more descriptive than pairwise variable statistics.

Furthermore, because the groups of measurement variables are expressed in the form of a certain combination of pairwise orthogonal axes and due to the nature of PCA, the method decomposes the entire variance found in the dataset, i.e. if one group does not explain the entire variance contained in the dataset, other groups will be found that further explain the variance. This allows for a systematic capture of the effects that may substantially affect the target variable V.

The output of the method, i.e. the determined groups of measurement variables, can be easily visualized and verified using standard dataset visualization techniques (using the PCA loadings plot). For example, they may be visualized by mapping one variable to the X axis of a scatter plot, another variable to the Y axis, another to the marker size, color, transparency, etc.

Furthermore, the output of the method may be provided to a controller (not shown in figure 4) which may then use the provided information to control a system such as a machine (arrangement) or a production line as illustrated by figure 1. The controller may for example use the provided information in case of a system malfunction to derive countermeasures, or may use the information to automate a schedule or to carry out a specific task.

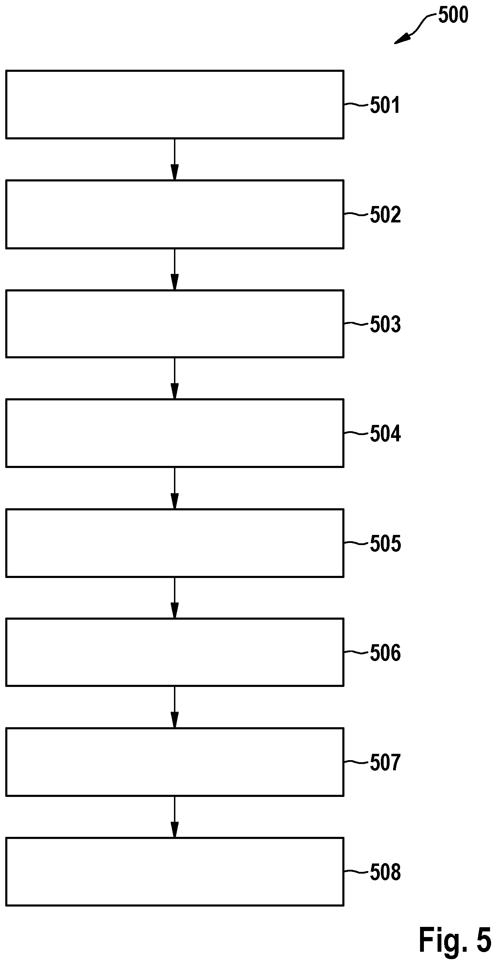

In summary, according to various embodiments, a computer-implemented method 500 for controlling a machine is provided as illustrated in figure 5.

In step 501, values of measurement variables for a plurality of measurement events during an operation of a machine are sensed, wherein a value is sensed for each measurement variable at each measurement event of the plurality of measurement events, each measurement variable representing an operation parameter of the machine.

It should be noted that sensed is meant as recorded, i.e. the values of the measurements variables don't necessarily have to be sensed by sensors, they may be controlled operation parameters, e.g. a set welding time. They also may be received from an outside source.

In step 502, a value of a target variable for each measurement event of the plurality of measurement events is determined.

In step 503, for each measurement event, an data point including the sensed values of the measurement variables and the determined value of the target variable is determined.

In step 504, a principal component analysis or a kernel principal component analysis for the plurality of data points resulting in loading values and principal components of the data points is performed.

In step 505, for the target variable, one or more principal components for which the absolute value of the loading value is greater than a first predetermined threshold are determined.

In step 506, for each determined principal component, one or more measurement variables for which the absolute value of the loading value is higher than a second predetermined threshold are identified.

It should be noted that the second predetermined threshold may be the same as the first predetermined threshold.

In step 507, the identified measurement variables for each determined principal component are grouped into a respective group (such that a plurality of groups are generated).

In step 508, joint control of operation parameters represented by measurement variables grouped into the same group is performed to modify the target variable.

According to various embodiments, in other words, a machine is controlled by performing a plurality of measurements during the operation of the machine, wherein each measurement variable represents an operation parameter of the machine. Then a target variable having the same number of samples (values) is determined, and added to the dataset of the measurement variables. On this dataset a PCA or a KPCA is then performed, resulting in loading values and principal components. For each principal component where the loading value corresponding to the target variable is high (above a predetermined threshold), i.e. where the target variable is active, all the measurement variables also having a high (above (the same or) another predetermined threshold) loading value are selected. The selected measurements variables for each principal component form a group. These groups of measurements variables are then used to control the operation parameters of the machine in order to modify the target variable. For example, in the case of a production line where the target variable represents the probability of a part having an anomaly, the determined groups of measurements variables have the strongest correlation to the target variable, i.e. are the most likely root cause of the anomaly. Based on this information, operation parameters of the production line may be changed/adjusted to avoid future anomalies.

The method of figure 5 may be performed by one or more computers including one or more data processing units. The term "data processing unit" can be understood as any type of entity that allows the processing of data or signals. For example, the data or signals may be treated according to at least one (i.e., one or more than one) specific function performed by the data processing unit. A data processing unit may include an analogue circuit, a digital circuit, a composite signal circuit, a logic circuit, a microprocessor, a micro controller, a central processing unit (CPU), a graphics processing unit (GPU), a digital signal processor (DSP), a programmable gate array (FPGA) integrated circuit or any combination thereof or be formed from it. Any other way of implementing the respective functions, which will be described in more detail below, may also be understood as data processing unit or logic circuitry. It will be understood that one or more of the method steps described in detail herein may be executed (e.g., implemented) by a data processing unit through one or more specific functions performed by the data processing unit.

## Claims

1. A computer-implemented method for controlling a production line, comprising:

   • sensing values of measurement variables for a plurality of measurement events during an operation of the production line, wherein a value is sensed for each measurement variable at each measurement event of the plurality of measurement events, each measurement variable representing an operation parameter of the production line;
   • determining a value of a target variable for each measurement event of the plurality of measurement events, wherein the target variable is a continuous variable representing a probability of a part produced in the production line being defective and/or having an anomaly;
   • determining, for each measurement event, a data point including the sensed values of the measurement variables and the determined value of the target variable by joining the sensed values of the measurement variables and the determined value of the target variable;
   • performing a principal component analysis or a kernel principal component analysis for the plurality of data points resulting in loading values and principal components of the data points;
   • determining, for the target variable, one or more principal components for which the absolute value of the loading value is greater than a first predetermined threshold, wherein the first predetermined threshold is set such that the totality of groups for the principal components includes at most a predetermined percentage of the measurement variables;
   • identifying, for each determined principal component, one or more measurement variables for which the absolute value of the loading value is higher than a second predetermined threshold, wherein the second predetermined threshold is set such that the totality of groups for the principal components includes at most a predetermined percentage of the measurement variables;
   • grouping the identified measurement variables for each determined principal component into a respective group; and
   • performing joint control of operation parameters represented by measurement variables grouped into the same group to modify the target variable.

2. The method of claim 1, further comprising:
   filtering out each group comprising the same measurement variables as another group if the eigenvalue of the principal component associated to the group is smaller than the eigenvalue of the principal component of the other group and the group and the other group indicate opposite correlations between the target variable and the measurement variables.

3. A machine controller configured to perform the method of any one of claims 1 to 2.

4. A computer program comprising instructions arranged to cause a computer system to perform the method according to any one of claims 1 to 2.

5. A computer-readable medium comprising transitory or non-transitory data representing instructions arranged to cause a computer system to perform the method according to any one of claims 1 to 2.

## Patentansprüche

1. Computerimplementiertes Verfahren zur Steuerung einer Produktionslinie, Folgendes umfassend:

   • Erfassen von Werten von Messvariablen für eine Vielzahl von Messereignissen während eines Betriebs der Produktionslinie, wobei ein Wert für jede Messvariable bei jedem Messereignis der Vielzahl von Messereignissen erfasst wird, wobei jede Messvariable einen Betriebsparameter der Produktionslinie darstellt;
   • Bestimmen eines Wertes einer Zielvariablen für jedes Messereignis aus der Vielzahl von Messereignissen, wobei die Zielvariable eine kontinuierliche Variable ist, die eine Wahrscheinlichkeit darstellt, dass ein in der Produktionslinie hergestelltes Teil fehlerhaft ist und/oder eine Anomalie aufweist;
   • Bestimmen eines Datenpunktes für jedes Messereignis, der die erfassten Werte der Messvariablen und den bestimmten Wert der Zielvariablen enthält, indem die erfassten Werte der Messvariablen und der bestimmte Wert der Zielvariablen verbunden werden;
   • Durchführen einer Hauptkomponentenanalyse oder einer Kernel-Hauptkomponentenanalyse für die Vielzahl von Datenpunkten, was zu Ladungswerten und Hauptkomponenten der Datenpunkte führt;
   • Bestimmen einer oder mehrerer Hauptkomponenten für die Zielvariable, für die der Absolutwert des Ladewerts größer als ein erster vorbestimmter Schwellenwert ist, wobei der erste vorgegebene Schwellenwert so festgelegt wird, dass die Gesamtheit der Gruppen für die Hauptkomponenten höchstens einen vorgegebenen Prozentsatz der Messvariablen umfasst;

• Identifizieren, für jede ermittelte Hauptkomponente, einer oder mehrerer Messvariablen, für die der Absolutwert des Ladungswerts höher als ein zweiter vorbestimmter Schwellenwert ist, wobei der zweite vorbestimmte Schwellenwert so eingestellt ist, dass die Gesamtheit der Gruppen für die Hauptkomponenten höchstens einen vorbestimmten Prozentsatz der Messvariablen umfasst;

• Gruppieren der identifizierten Messvariablen für jede ermittelte Hauptkomponente in eine entsprechende Gruppe; und

• Durchführen einer gemeinsamen Steuerung von Betriebsparametern, die durch in derselben Gruppe zusammengefasste Messvariablen repräsentiert werden, um die Zielgröße zu verändern.

2. Verfahren nach Anspruch 1, das ferner Folgendes umfasst:
Herausfiltern jeder Gruppe, die dieselben Messvariablen wie eine andere Gruppe umfasst, wenn der Eigenwert der der Gruppe zugeordneten Hauptkomponente kleiner ist als der Eigenwert der Hauptkomponente der anderen Gruppe und die Gruppe und die andere Gruppe entgegengesetzte Korrelationen zwischen der Zielvariablen und den Messvariablen aufweisen.

3. Maschinensteuerung, die so konfiguriert ist, dass sie das Verfahren nach einem der Ansprüche 1 bis 2 durchführt.

4. Computerprogramm mit Anweisungen, die so beschaffen sind, dass sie ein Computersystem veranlassen, das Verfahren nach einem der Ansprüche 1 bis 2 durchzuführen.

5. Computerlesbares Medium mit flüchtigen oder nichtflüchtigen Daten, die Anweisungen darstellen, die so angeordnet sind, dass sie ein Computersystem veranlassen, das Verfahren nach einem der Ansprüche 1 bis 2 durchzuführen.

**Revendications**

1. Procédé mis en œuvre par ordinateur pour commander une chaîne de production, comprenant :

• la détection de valeurs de variables de mesure pour une pluralité d'événements de mesure pendant un fonctionnement de la chaîne de production, dans lequel une valeur est détectée pour chaque variable de mesure à chaque événement de mesure de la pluralité d'événements de mesure, chaque variable de mesure représentant un paramètre de fonctionnement de la chaîne de production ;

• la détermination d'une valeur d'une variable cible pour chaque événement de mesure de la pluralité d'événements de mesure, dans lequel la variable cible est une variable continue représentant une probabilité de défectuosité et/ou d'anomalie d'une pièce produite dans la chaîne de production ;

• la détermination, pour chaque événement de mesure, d'un point de données comportant les valeurs détectées des variables de mesure et la valeur déterminée de la variable cible en joignant les valeurs détectées des variables de mesure et la valeur déterminée de la variable cible ;

• la réalisation d'une analyse de composants principaux ou d'une analyse de composants principaux de noyau pour la pluralité de points de données aboutissant à des valeurs de charge et des composants principaux des points de données ;

• la détermination, pour la variable cible, d'un ou plusieurs composants principaux pour lesquel la valeur absolue de la valeur de charge est supérieure à un premier seuil prédéterminé, dans lequel le premier seuil prédéterminé est fixé de telle sorte que la totalité de groupes des composants principaux comporte au plus un pourcentage prédéterminé des variables de mesure ;

• l'identification, pour chaque composant principal déterminé, d'une ou plusieurs variables de mesure pour lesquelles la valeur absolue de la valeur de charge est supérieure à un deuxième seuil prédéterminé, dans lequel le deuxième seuil prédéterminé est fixé de telle sorte que la totalité des groupes des composants principaux comporte au plus un pourcentage prédéterminé des variables de mesure ;

• le regroupement des variables de mesure identifiées pour chaque composant principal déterminé dans un groupe respectif ; et

• la réalisation d'une commande conjointe de paramètres de fonctionnement représentés par des variables de mesure regroupées dans le même groupe pour modifier la variable cible.

2. Procédé selon la revendication 1, comprenant en outre :
l'élimination par filtrage de chaque groupe comprenant les mêmes variables de mesure qu'un autre groupe si la valeur propre du composant principal associée au groupe est inférieure à la valeur propre du composant principal de l'autre groupe et si le groupe et l'autre groupe indiquent des corrélations opposées entre la variable cible et les variables de mesure.

3. Contrôleur de machine configuré pour réaliser le procédé selon l'une quelconque des revendications 1 à 2.

4. Programme d'ordinateur comprenant des instructions conçues pour amener un système informatique à réaliser le procédé selon l'une quelconque des revendications 1 à 2.

5. Support lisible par ordinateur comprenant des données transitoires ou non transitoires représentant des instructions conçues pour amener un système informatique à réaliser le procédé selon l'une quelconque des revendications 1 à 2.

100

102

101

106

107

110

104    105

103

108

109

Fig. 1

Fig. 2

300

Fig. 3

Fig. 4

500

501

502

503

504

505

506

507

508

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BEI WANG et al.** Loading-Based Principal Component Selection for PCA Integrated with Support Vector Data Description. *INDUSTRIAL & ENGINEERING CHEMISTRY RESEARCH,* 02 February 2015, vol. 54 (5), 1615-1627

- **SCHÖLKOPF et al.** Nonlinear component analysis as a kernel eigenvalue problem. *Neural Computation,* 1996